Europäisches Patentamt

European Patent Office

Office européen des brevets

(11) Veröffentlichungsnummer: **0 160 890**
**A2**

# (12) EUROPÄISCHE PATENTANMELDUNG

(21) Anmeldenummer: 85104997.3

(22) Anmeldetag: 25.04.85

(51) Int. Cl.⁴: **F 23 J 13/00**
**F 16 L 9/22, F 16 L 9/00**
**F 16 L 23/00**

(30) Priorität: 26.04.84 DE 8412844 U
20.09.84 DE 3434491

(43) Veröffentlichungstag der Anmeldung:
**13.11.85 Patentblatt 85/46**

(84) Benannte Vertragsstaaten:
**AT BE CH DE FR GB IT LI LU NL SE**

(71) Anmelder: **Toschi Produktions-GmbH**
**August-Bebel-Allee 1**
**D-2800 Bremen(DE)**

(72) Erfinder: **Meyer, Ralph**
**Am Schäfermoor 1**
**D-2802 Ottersberg(DE)**

(72) Erfinder: **Baarsch, Kurt**
**Schwedenschanze 9c**
**D-2807 Achim-Baden(DE)**

(74) Vertreter: **Eisenführ & Speiser**
**Martinistrasse 24**
**D-2800 Bremen 1(DE)**

(54) **Auf einem Stützgerüst befestigbarer Abgaskanal.**

(57) Es wird ein Abgaskanal o. dgl. beschrieben, der aus einer Vielzahl gleicher, axial begrenzter Schalenelemente besteht. Zur Bildung eines Abschnittes des Kanals werden mindestens zwei dieser Schalenelemente benötigt. Jedes Schalenelement ist entlang seiner vier Kanten mit radial gerichteten Flanschen zur gegenseitigen Verbindung aneinanderstoßender Schalenelemente versehen. Darüber hinaus kann neben dieser Flanschverbindung zusätzlich eine muffenartige Verbindung benachbarter Schalenelemente vorgesehen sein, um die Verbindung gasdicht zu halten.

Fig. 1

EP 0 160 890 A2

### B e s c h r e i b u n g

Die Erfindung betrifft einen auf einem Stützgerüst befestigbaren Abgaskanal o.dgl., bestehend aus einer Vielzahl von Schalenelementen.

Abgaskanäle werden insbesondere im Kraftwerksbau benötigt, wo sie den Rauchgas-Ausgang der Feuerungsanlage mit einer Rauchgaswaschanlage und/oder einem Kühlturm verbinden. Herkömmlich für diesen Zweck sind korrosionsfeste, selbsttragende Metallrohre, die jedoch in Anbetracht der benötigten Längen der Abgaskanäle von beispielsweise 30 bis 100 m eine erhebliche Investition erfordern, da die Rohrdurchmesser erheblich sind, so daß der Aufwand für das korrosionsfeste Metall, für dessen Verarbeitung zu Rohren und für deren Transport zum Einbauort beträchtliche Werte annimmt.

Der Erfindung lag die Aufgabe zugrunde, einen gasdichten Abgaskanal vorzuschlagen, welcher eine deutliche Senkung der vorstehend angesprochenen Investitionskosten ermöglicht.

Die erfindungsgemäße Lösung dieser Aufgabe besteht darin, daß in Kanalumfangsrichtung mindestens zwei Schalenelemente zur Bildung eines Kanalabschnittes aneinander befestigt sind, und daß jedes Schalenelement entlang seiner beiden in Kanalumfangsrichtung liegenden Stirnkanten und entlang seiner beiden axial verlaufenden Stirnkanten mit auswärts gerichteten Stirn- bzw. Längsflanschen zur gegenseitigen Verbindung aneinanderstoßender Schalenelemente versehen ist.

Ein solcher Abgaskanal besitzt einen kreisrunden oder vieleckigen Querschnitt und läßt sich mit Vorteil aus glasfaserverstärktem Polyester herstellen, welches korrosionsbeständig ist und den im Betrieb normalerweise auftretenden Temperaturen von etwa 70°C sowie im Anfahrbetrieb auch den hierbei kurzzeitig auftretenden höheren Temperaturen von etwa 120°C gewachsen ist. Durch die Aufteilung des Abgaskanals in eine Vielzahl von miteinander verbindbaren Schalenelementen wird die Herstellung preiswert und der benötigte Transportraum ist außerordentlich gering, weil die einzelnen Schalenelemente eng aneinanderliegend transportiert werden können, so daß auch die Transportkosten sehr niedrig sind.

Wird ein kreisförmiger Kanalquerschnitt verwirklicht, so sind die Schalenelemente in Umfangsrichtung mit einem vorgegebenen konstanten Radius gekrümmt, und die Stirn- sowie die Längsflansche sind radial auswärts gerichtet, um eine möglichst große Symmetrie der Schalenelemente, und damit ihre Verwendbarkeit an beliebiger Stellen des Kanalumfangs zu ermöglichen.

Besitzt dagegen der Abgaskanal einen Vieleck-Querschnitt, so sind bevorzugt die Schalenelemente ebene Platten, an deren Stirn- und Längskanten die Stirn- und Längsflansche bevorzugt ebenfalls zur Erzielung einer hohen Symmetrie radial nach außen verlaufen. Als Vieleckquerschnitt wird ein rechteckiger oder quadratischer Querschnitt bevorzugt, bei dem vier ebene Schalenelemente rechtwinklig mittels radial auswärts gerichteter Stirn- und Längsflansche aneinandergeflanscht werden. Zur Erhöhung der Steifigkeit der einzelnen Schalenelemente lassen sich vorteilhafterweise außenliegende Verstärkungsrippen mit Voll- oder Hohlprofil anbringen,
die bevorzugt in Umfangsrichtung laufen.

In einer bevorzugten Ausführungsform der Erfindung bilden die Längsflansche der Schalenelemente gleichzeitig
die Tragflansche, an denen ein Stützelement eines Stützgerüstes befestigt ist, dessen Höhe größer ist als der
halbe Kanaldurchmesser. Diese Ausführungsform ermöglicht die Verwendung von vergleichsweise dünnwandigen
Schalenelementen und die Verlagerung der für den Abgaskanal erforderlichen Stabilität in die preiswert herzustellenden Stützelemente. Der Abgaskanal braucht in
diesem Fall also nicht mehr selbsttragend zu sein.

In einer besonders bevorzugten Ausgestaltung der
Erfindung ist vorgesehen, daß von den vier Kantenabschnitten jedes Schalenelementes zwei aneinanderstoßende Abschnitte zur Bildung einer Muffenverbindung
zu benachbarten Schalenelementen aus der Hauptebene der
Rohrwand versetzt sind und daß diese oder die beiden
anderen aneinanderstoßenden Abschnitte in Richtung der
angrenzenden Kanalwand-Hauptebene über die freien
Stirnflächen der ihnen zugeordneten Flansche hinausragen.

Bei derartigen Muffenverbindungen ist bevorzugt
zwischen dem versetzten Abschnitt des Schalenelements
und dem nach der Montage parallel dazu verlaufenden
Abschnitt des angrenzenden Schalenelements ein Spalt
zur Aufnahme eines Klebe- und/oder Dichtmittels vorgesehen. Im Bereich des Spalts ist besonders bevorzugt
eine Füllbohrung zum Einbringen des Kleb- oder Dichtmittels in den Spalt vorhanden.

0160890

Diese bevorzugte Ausgestaltung der Stirn- und Längsflansche stellt sicher, daß auch bei thermisch oder
mechanisch bedingten Längenänderungen oder Verschiebungen, insbesondere bei Verwendung eines geeigneten
Klebe/Dichtmittels die Flanschverbindungen gasdicht
bleiben, so daß das seitliche Austreten von Abgasen aus
dem Abgaskanal verhindert wird.

Die Erfindung ist nachstehend anhand einiger in der
Zeichnung dargestellter Ausführungsbeispiele erläutert.
Es zeigen:

Fig.  1  eine Perspektivansicht einer ersten
Ausführungsform,

Fig.  2  eine Perspektivansicht einer zweiten
Ausführungsform, und

Fig.  3  eine Perspektivansicht einer dritten
Ausführungsform;

Fig.  4  einen Schnitt entlang der Linien A-B

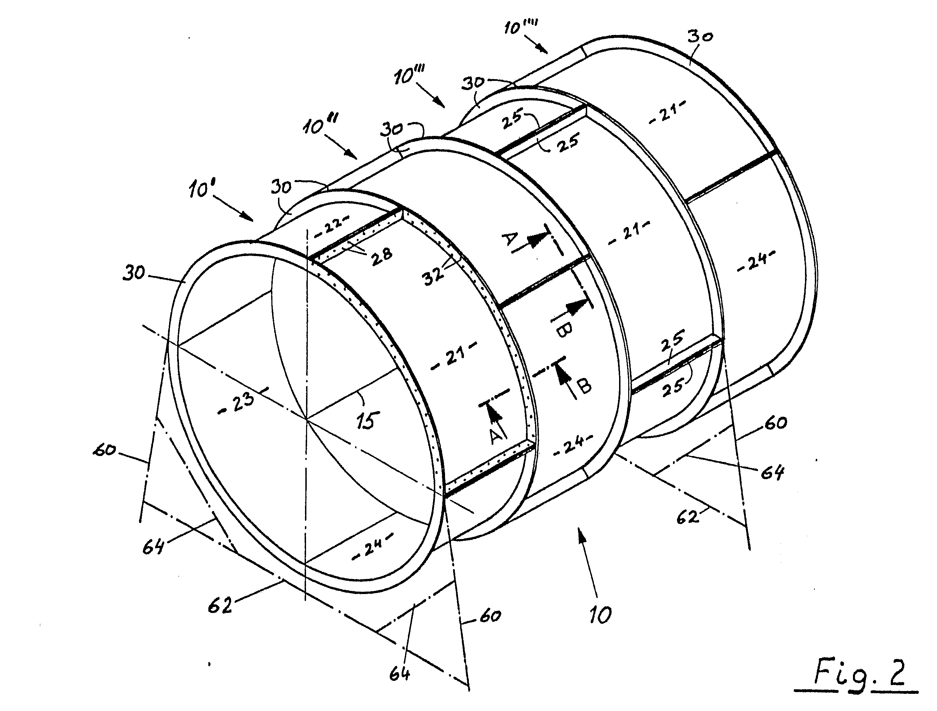

in Fig. 2.

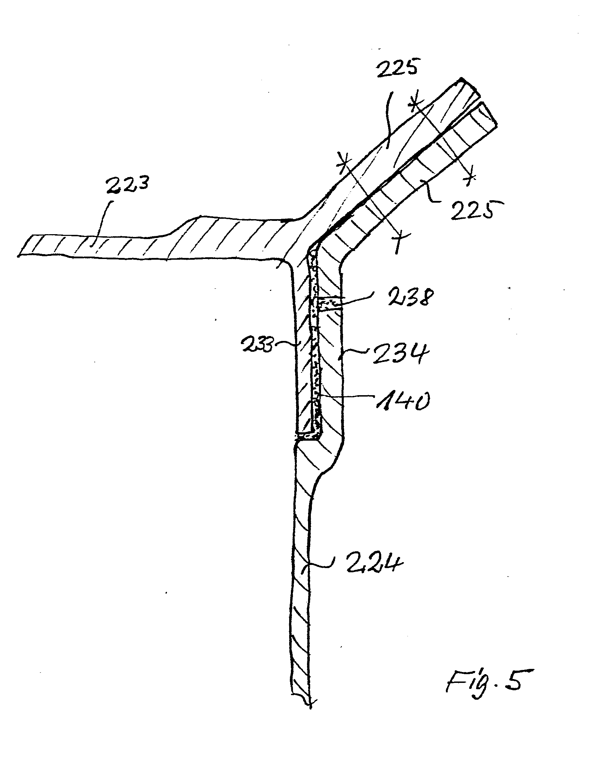

Fig.  5  eine Detailansicht der Zone X der

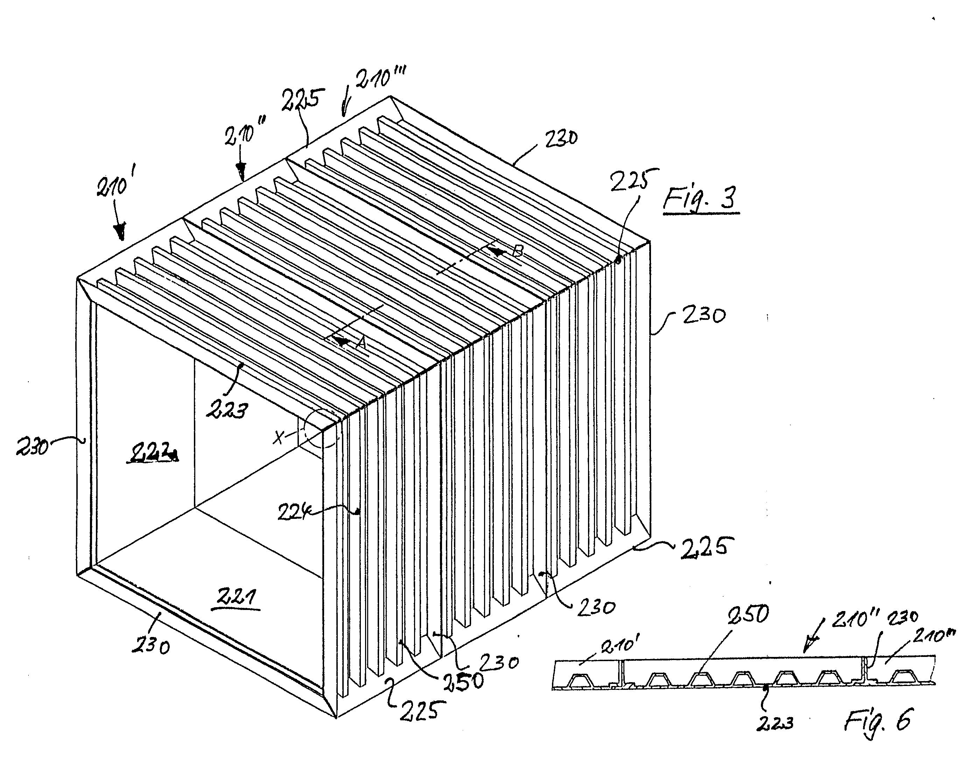

Fig. 3;   und

Fig.  6  einen Schnitt längs der Line A-B
der Fig. 3.

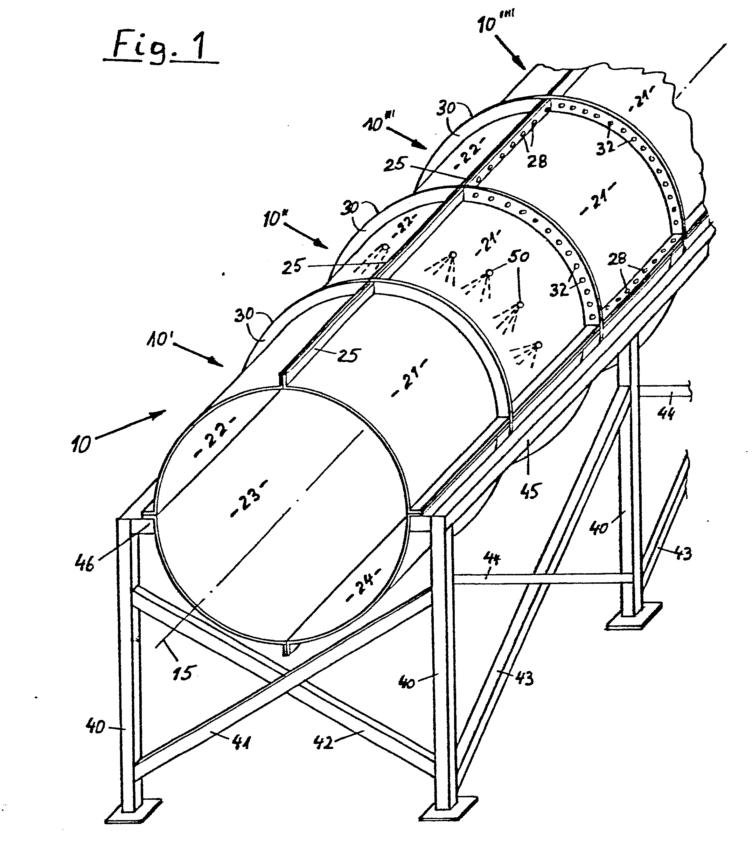

Gemäß der Darstellung von Fig. 1, die einen Teilbereich
eines Abgaskanals mit Kreisquerschnitt betrifft, wird
dieser Teilbereich von vier Schalenelementen 10', 10",
10'" und 10"" gebildet. Der aus diesen Abschnitten gebildete Kanal ist nachstehend pauschal mit 10 bezeichnet.

Jeder Kanalabschnitt des Ausführungsbeispiels wird von vier untereinander identischen Schalenelementen 21, 22, 23, 24 gebildet. Wie die Zeichnung erkennen läßt, ist jedes Schalenelement um die Kanalachse 15 in einer Ebene gekrümmt und stellt einen Viertelkreis des Kanals 10 dar. Die in Richtung der Kanalachse 15 verlaufenden Kanten der Schalenelemente weisen radial auswärts ragende Längsflansche 25 auf, und alle aneinanderstoßenden Längsflansche 25 von in Umfangsrichtung benachbarter Schalenelemente sind flächig miteinander verbunden, wodurch das im Querschnitt kreisförmige Rohr entsteht. Bei dem Kanalabschnitt 10'" ist angedeutet, daß die Schalenelemente im Bereich der Längsflansche 25 mittels Schrauben 28 verschraubt sein können.

Jedes Schalenelement weist darüber hinaus entlang seiner in Umfangsrichtung verlaufenden Kanten Stirnflansche 30 auf, so daß jeweils vier in Umfangsrichtung aufeinanderfolgende Stirnflansche 30 den zugehörigen Kanalabschnitt zu einem Flanschrohr machen. Im Falle des in der Zeichnung vorn liegenden Kanalabschnittes 10' wurden die vorn liegenden Stirnflansche 30 der Übersicht halber weggelassen. Jeder Rohrabschnitt weist somit an seinen beiden Enden jeweils einen aus vier Segmenten zusammengesetzten Stirnflansch auf, der mit dem Stirnflansch des nächstfolgenden Kanalabschnitts z. B. durch Verklebung verbunden ist. Alternativ oder additiv können die Stirnflansche 30 auch durch Schrauben 32 miteinander verschraubt sein. Es sei hervorgehoben, daß die Enden der beiden Längsflansche 25 jedes Schalenelements mit den Enden der Stirnflansche 30 desselben Schalenelementes fest verbunden sind. Diese vier Flansche bilden also einen, senkrecht von der Oberfläche des Schalenelementes abstehenden, umlaufenden Rand.

Mindestens einige der Schalenelemente 21 bis 24 des Kanals 10 sind mit radial aus dem Rohrumfang herausragenden Tragflanschen versehen. Diese werden gemäß Fig. 1 von den in horizontaler Ebene diametral gegenüberliegenden Längsflanschen 25 gebildet und dienen dem Angriff einer Tragkonstruktion für den Kanal in Form des in der Zeichnung schematisch angedeuteten und aus mehreren Streben 40, 41, 42, 43, 44, 45, 46 gebildeten Stützgerüstes, auf dessen Längsstreben 46 die Tragflansche bzw. Längsflansche der Schalenelemente aufliegen.

Die Schalenelemente 21 bis 24 des Kanals 10 sind aus glasfaserverstärkten Polyester hergestellt. In einer praktischen Ausführungsform hatte jeder Kanalabschnitt einen Innendurchmesser von 7 m und eine Wandstärke von etwa 12 mm. Seine Länge betrug 2500 mm. Mit diesen Abmessungen und bei Verwendung von glasfaserverstärktem Polyester ist der Kanal 10 nicht selbsttragend, wenngleich die verschiedenen Flansche auch die Funktion von Verstärkungselementen übernehmen. Um die notwendige Endstabilität des Kanals zu erreichen, wird dieses über seine Längsflansche 25 an den Längsholmen 46 des Stützelementes befestigt, das seinerseits in nicht dargestellter Weise auf einem Sockel befestigt sein kann.

Bei der Verwendung von Polyester als Material für die Schalenelemente muß berücksichtigt werden, daß dieses nur kurzzeitig Temperaturen bis etwa 120°C ausgesetzt werden darf. Es muß also dafür gesorgt werden, daß das zu fördernde Rauchgas diese Temperaturgrenze auch in einem Störfall nicht überschreitet. Dies kann kraftwerksseitig geschehen. Am Beispiel des mittleren Rohrabschnittes 10" von Fig. 1 ist jedoch eine Möglichkeit aufgezeigt, wie der Kanal in allen Ausführungsbeispielen selbst für einen derartigen Störfall ausgebildet sein kann. Die Schalenelemente 21 bis 24 sind mit einer Anzahl von Lechler-Düsen 50 ausgerüstet, deren Auslässe in das Innere des Kanalabschnittes gerichtet sind und die außerhalb des Kanals 10 über eine nicht dargestellte Sammelleitung an einen Vorrat einer Kühlflüssigkeit angeschlossen sind. Wenn bei einem derartig ausgerüsteten Kanalabschnitt, der zweckmäßigerweise das in Strömungsrichtung den Anfang des Abgaskanals bilden sollte, ein nicht dargestellter Sensor eine Überschreitung der zulässigen Grenztemperatur meldet, dann wird Kühlflüssigkeit durch die Lechler-Düsen 50 in das Innere des Kanals eingedüst. Durch Wahl der Anzahl von Düsen unter Berücksichtigung des Rauchgas-Durchsatzes sowie der Temperatur und Menge der Kühlflüssigkeit kann sichergestellt werden, daß das mit überhöhter Temperatur vom Kraftwerk kommende Rauchgas beim Eintritt in den Abgaskanal auf eine zulässige Temperatur heruntergekühlt wird.

Fig. 2 zeigt einen Teil eines Abgaskanals aus vier Kanalabschnitten 10' - 10"", die denjenigen gleichen, die auch im Ausführungsbeispiel gemäß Fig. 1 ausführlich beschrieben wurden. Abweichend ist in diesem Ausführungsbeispiel vorgesehen, daß aneinandergrenzende Kanalabschnitte 10', 10" oder 10", 10'" etc. um die Kanalachse 15 soweit gegeneinander verdreht sind, daß die Längsflansche 25 innerhalb eines Kanalabschnittes (z. B. 10') gegenüber den Längsflanschen 25 jedes angrenzenden Kanalabschnitts (z. B. 10") gegeneinander versetzt verlaufen. Das Maß dieses Versatzes ist bevorzugt etwa gleich dem halben Umfangsabstand, den die Längsflansche 25 jedes Schalenelementes voneinander haben. Durch diese Maßnahme wird die Festigkeit des fertigen Kanals weiter erhöht, so daß das Stützgerüst gegebenenfalls leichter ausgeführt werden kann. Dieses besteht im Ausführungsbeispiel gemäß Fig. 2 aus einer Anzahl von Pendelstützen, die untereinander mittels Streben 62, 64 verbunden sind.

Fig. 3 zeigt einen Teil eines rechteckförmigen Abgaskanals aus drei Kanalabschnitten 210' bis 210'''. Jeder Kanalabschnitt ist aus jeweils vier ebenen Schalenementen 221, 222, 223, 224 zusammengesetzt, die mittels radial auswärts gerichteter Stirnflansche 230 sowie axial in den Rechteck-Kanten verlaufenden Längsflanschen 225 rechtwinklig aneinander geflanscht sind. Die einzelnen Schalenelemente 221, 222, 223 und 224 sind eben ausgebildet und besitzen an ihrer Außenseite in Umfangsrichtung verlaufende hohle Verstärkungsrippen 250, vgl. insbesondere Fig. 6. Die einzelnen Schalenelemente sind aus Kunststoffmaterial hergestellt.

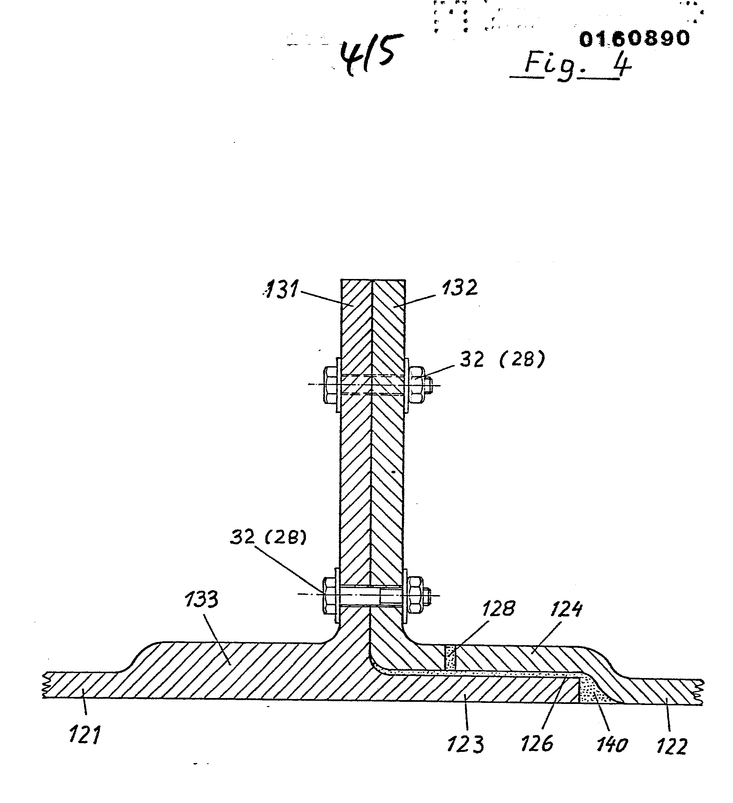

Fig. 4 zeigt eine besonders bevorzugte Ausgestaltung der stirn- und längsseitigen Verbindung von aneinandergrenzenden Schalenelementen am Beispiel zweier Schalenelemente 121, 122. In Fig. 2 ist eingezeichnet, daß der in Fig. 4 dargestellte Schnitt A-B sowohl parallel als auch senkrecht zur Kanalachse 15 verläuft, so daß die in Fig. 3 gezeigten Flansche (131, 132) alternativ sowohl Stirn- oder Längsflansche darstellen. Aus Gründen der Vereinfachung wird nachstehend der gemäß Fig. 2 parallel zur Kanalachse 15 verlaufende Schnitt beschrieben. Es versteht sich nach dem bisher Gesagten, daß die folgende Erläuterung sinngemäß identisch für alle in Umfangsrichtung aufeinanderfolgenden Stoßstellen derjenigen Schalenelemente gilt, die gemeinsam jeweils einen Kanalabschnitt bilden. Darüber hinaus versteht es sich, daß die Ausgestaltung gemäß Fig. 3 sowohl für das Ausführungsbeispiel gemäß Fig. 1 als auch für dasjenige gemäß Fig. 2 mit Vorteil verwendbar ist.

Fig. 4 zeigt das rechte Ende des Schalenelementes 121 sowie das linke Ende des Schalenelementes 122. Es sei deshalb betont, daß das linke Ende des linken Schalenelementes 121 identisch mit dem gezeichneten rechten Ende des rechten Schalenelementes 122 ist. Entsprechendes gilt für das rechte Ende des rechten Schalenelementes. Hieraus folgt, daß die zueinander parallelen Kanten jedes Schalenelementes im Bereich der Flansche 131, 132 unterschiedlich ausgestaltet sind.

Das besondere an der Ausführungsform gemäß Fig. 4 ist, daß neben der Flanschverbindung aneinandergrenzender Schalenelemente gleichzeitig eine Muffenverbindung vorgesehen ist. Zu diesem Zweck ist das Schalenelement 121 über die freie Stirnfläche seines Flansches 131 hinaus um einen axial verlaufenden Abschnitt 123 verlängert, den ein ausgekröpfter Abschnitt 124 am stirnseitigen Ende des anderen Schalenelementes 122 übergreift. Die Auskröpfung des Abschnittes 124 ist unter Berücksichtigung der radialen Dicke des Abschnittes 123 so gewählt, daß zwischen den beiden Abschnitten 123, 124 ein Spalt 126 verbleibt. Dieser Spalt 126 ist einerseits am freien Ende des Abschnittes 123 zum Inneren des Kanals offen und steht andererseits über eine den Abschnitt 124 durchsetzende Bohrung 128 mit der Umgebung in Verbindung.

Im dargestellten Ausführungsbeispiel gemäß Fig. 3 ist die Wandstärke des fertigen Rohres im Bereich der Abschnitte 123, 124 um die radiale Breite des Spaltes 126 dicker als die doppelte Wandstärke der Schalenelemente außerhalb des Muffenbereiches, und wie erkennbar ist, ist ein links an den Flansch 131 des Schalenelementes 121 angrenzender Abschnitt 133 sowohl in seiner axialen Länge als auch in seiner radialen Dicke dem rechts der Flansche 131, 132 befindlichen Muffenbereich analog ausgebildet.

Zum Verbinden der Schalenelemente 121, 122 werden zunächst die aufeinander zu weisenden Stirnflächen der Flansche 131, 132 mit einer korrosionsfesten Kleberschicht versehen und dann in die in der Zeichnung gezeigte Stellung zusammengeschoben. In dieser Stellung werden die Schalenelemente 121, 122 mit Hilfe der Schrauben 32, die in zwei radial beabstandeten Reihen vorgesehen sind, zusammengeheftet. Dann wird die zum Kanalinneren gerichtete Öffnung des Spaltes 126 abgeklebt und ein Kunstharz oder anderes Dichtmittel durch die Bohrung 128 in den Spalt 126 eingepreßt. Es versteht sich, daß in Umfangsrichtung des Abschnittes 124 mehrere Bohrungen 128 vorgesehen sein können und daß die in das Kanalinnere weisende Öffnung des Spaltes 126 je nach Konsistenz des in den Spalt eingepreßten Dichtmittels auch offen bleiben kann.

Die kombinierte Muffen- und Flanschverbindung aneinandergrenzender Schalenelemente erhöht sowohl die Dichtigkeit als auch die Festigkeit aller Verbindungsstellen innerhalb des Rohres 10 und macht insbesondere die Verbindung auch bei thermischer Ausdehnung oder Verkürzung der Kanalelemente 10, 210 gasdicht.

Fig. 5 zeigt eine vergrößerte Ansicht des Bereiches X
der Fig. 3. Dargestellt ist die Flansch- und Muffenverbindung des rechteckförmigen Abgaskanals, die der
Flansch- und Muffenverbindung des kreisrunden Abgaskanals (Fig. 4) entspricht. Das Schalenelement 221 besitzt an seiner Längskante einen radial auswärts gerichteten Längsflansch 225 und ist über die freie Stirnfläche dieses Flansches 225 hinaus um einen Abschnitt
233 verlängert, der in die Richtung der Hauptebene des
angrenzenden Schalenelements 224 verläuft und also im
dargestellten Ausführungsbeispiel rechtwinklig zur
Hauptebene des Schalenelements 223 angeformt ist. Der
Abschnitt 233 wird von einem parallel zur Hauptebene
ausgekröpften Abschnitt 234 des Schalenelements 224
überdeckt, an dessen Ende der radial auswärts gerichtete Längsflansch 225 des Schalenelements 224 ansetzt.
Zwischen den sich einander überlappenden Abschnitten
233 und 234 ist ein Spalt 236 ausgebildet, der z. B.
über die Bohrung 238 mit Kleber oder Dichtmittel gefüllt wird, wie dies bei der Verbindung gemäß Fig. 4
schon beschrieben ist. Die Schalenelemente lassen sich
entweder mit einer Schraubverbindung oder einer Klebeverbindung aneinander anflanschen.

Fig. 6 zeigt einen Querschnitt längs der Linie A-B der
Fig. 3. Drei benachbarte Schalenelemente 223, deren
Stirnflansch-Verbindung 230 im Schnitt gezeigt ist,
besitzen auf ihrer Außenfläche in Umfangsrichtung des
Abgaskanals gerichtete Verstärkungsrippen mit Hohlprofil. Alternativ ist auch ein Vollprofil oder eine
andere Ausrichtung der Verstärkungsrippen möglich.

Unser Zeichen: **T 338**

Anmelder /Inh.: **Toschi**

Aktenzeichen: **Neuanmeldung**

Datum: **24. April 1985**

Patentanwälte
Dipl.-Ing. Günther Eisenführ
Dipl.-Ing. Dieter K. Speiser
Dr.-Ing. Werner W. Rabus
Dipl.-Ing. Detlef Ninnemann
Dipl.-Ing. Jürgen Brügge

TOSCHI PRODUKTIONS-GMBH

August-Bebel-Allee 1, 2800 Bremen

—————————————————————————————————————

Auf einem Stützgerüst befestigbarer Abgaskanal

—————————————————————————————————————

## A n s p r ü c h e

1. Auf einem Stützgerüst befestigbarer Abgaskanal o.dgl., bestehend aus einer Vielzahl von Schalenelementen,

dadurch gekennzeichnet, daß in Kanalumfangsrichtung mindestens zwei Schalenelemente (21 - 24; 221 - 224) zur Bildung eines Kanalabschnittes (10', 210') aneinander befestigt sind, und daß jedes Schalenelement entlang seiner beiden in Kanalumfangsrichtung liegenden Stirnkanten und entlang seiner beiden axial verlaufenden Stirnkanten mit auswärts gerichteten Stirn- bzw. Längsflanschen (30 bzw. 25; 230 bzw. 225) zur gegenseitigen Verbindung aneinanderstoßender Schalenelemente versehen ist.

WWR/sg

Martinistraße 24    Telefon        Telecopierer     Telex           Datex-P
D-2800 Bremen 1     0421-328037    0421-326834      244020 fepat d   44421040311

2. Abgaskanal nach Anspruch 1,
dadurch gekennzeichnet, daß die Stirn- und die Längsflansche (30, 25; 230, 225) radial auswärts gerichtet
sind.

3. Abgaskanal nach Anspruch 1 oder 2,
dadurch gekennzeichnet, daß die Schalenelemente
(21 - 24) zur Erzeugung eines kreisförmigen Kanalquerschnitts in Umfangsrichtung mit einem vorgegebenen
Radius gekrümmt sind.

4. Abgaskanal nach Anspruch 1 oder 2,
dadurch gekennzeichnet, daß pro Kanalabschnitt in Kanalumfangsrichtung mindestens drei ebene Schalenelemente
zur Erzeugung eines vieleckigen Kanalquerschnitts aneinander befestigt sind.

5. Abgaskanal nach Anspruch 4,
dadurch gekennzeichnet, daß pro Kanalabschnitt in Kanalumfangsrichtung jeweils vier ebene Schalenelemente
(221 - 224) rechtwinklig zueinander an den Stirn- und
Längsflanschen (225, 230) befestigt sind.

6. Abgaskanal nach einem der vorstehenden Ansprüche,
dadurch gekennzeichnet, daß die Schalenelemente
(21 - 24; 221 - 224) außenliegende Verstärkungsrippen
(250) besitzen.

7. Abgaskanal nach einem der vorstehenden Ansprüche
1 bis 6,
dadurch gekennzeichnet, daß an mindestens einigen
Schalenelementen Tragflansche (25) vorgesehen sind.

8. Abgaskanal nach Anspruch 7,
dadurch gekennzeichnet, daß die Tragflansche von den
Längsflanschen (25) gebildet sind.

9. Abgaskanal nach einem der vorstehenden Ansprüche,
dadurch gekennzeichnet, daß die Schalenelemente
(21 - 24) aus glasfaserverstärktem Polyester bestehen.

10. Abgaskanal insbesondere nach einem der vorstehenden
Ansprüche,
dadurch gekennzeichnet, daß an den Trag_lanschen ein
Stützelement (40 - 46) befestigt ist, dessen Höhe
größer ist als der halbe Kanaldurchmesser.

11. Abgaskanal nach einem der Ansprüche 1 bis 10,
gekennzeichnet durch in die Schalenelemente (21 - 24)
eingesetzte Düsen (50), deren Auslaß im Kanalinneren
und deren Einlaß außerhalb des Abgaskanals (10) liegt.

12. Abgaskanal nach mindestens einem der Ansprüche
1 bis 3,
dadurch gekennzeichnet, daß zwei aufeinanderfolgende
Kanalabschnitte (10', 10"; 10", 10"'; 10"', 10"") in
Umfangsrichtung so zueinander verdreht sind, daß die
Längsflansche (25) eines Kanalabschnitts versetzt zu
den Längsflanschen (25) des angrenzenden Kanalabschnitts verlaufen.

13. Abgaskanal nach mindestens einem der Ansprüche
1 bis 12,
dadurch gekennzeichnet, daß von den vier Kantenabschnitten jedes Schalenelementes (21, 22, 23, 24) zwei aneinanderstoßende Abschnitte (124) zur Bildung einer Muffenverbindung zu benachbarten Schalenelementen aus der Hauptebene der Kanalwand versetzt sind und daß diese oder die beiden anderen aneinanderstoßenden Abschnitte (123) in Richtung der angrenzenden Kanalwand-Hauptebene über die freien Stirnflächen der ihnen zugeordneten Flansche (131) hinausragen.

14. Abgaskanal nach Anspruch 12 oder 13, dadurch gekennzeichnet, daß zwischen jedem versetzten Abschnitt (124) eines Schalenelementes und dem nach der Montage parallel dazu verlaufenden Abschnitt (123) des angrenzenden Schalenelementes ein Spalt (126) zur Aufnahme eines Kleb- und/oder Dichtmittels (140) vorgesehen ist.

15. Abgaskanal nach Anspruch 14, dadurch gekennzeichnet, daß einer der den Muffenbereich bildenden Abschnitte (124) im Bereich des Spaltes (126) von mindestens einer Füllbohrung (128) für das Mittel (140) durchsetzt ist.

Fig. 1

0160890

Fig. 2

0160890

Fig. 3

Fig. 6

210'  210''  210'''  225  230  223  222  224  X  A  B  221  250  225

Fig. 4

0160890

Fig. 5